# EUROPEAN PATENT APPLICATION

(11) **EP 1 693 391 A1**
(43) Date of publication of application: **23.08.2006**
(21) Application number: 04819891.5
(22) Date of filing: 02.12.2004
(51) Int. Cl.: C08F 251/00

(54) **PROCESS FOR PRODUCING WATER-SOLUBLE POLYMER**

(30) Priority: 03.12.2003 JP 2003404738
(71) Applicant: TOAGOSEI CO., LTD., Tokyo 105-8419 (JP)
(72) Inventor: TAKEDA, Ken c/o Toagosei Co., Ltd.,, Nagoya-shi Aichi, 4550027 (JP); ADACHI, Koichi c/o Toagosei Co., Ltd.,, Nagoya-shi Aichi, 4550027 (JP); TSUZUKI, Tetsuya c/o Toagosei Co., Ltd.,, Sakaide-shi Kagawa, 7620004 (JP); MORI, Yoshio c/o Toagosei Co., Ltd.,, Nagoya-shi Aichi, 4550027 (JP)
(74) Representative: Pohlmann, Eckart
(86) International application number: PCT/JP2004/017936
(87) International publication number: WO 2005/054316

(57) **Abstract**

An object of the present invention is to provide a process for easily producing a water-soluble polymer which has a reduced residual monomer amount and has excellent various flocculating performances when used as a flocculant, the process being capable of grafting a high molecular weight polymer onto starch.

A process for producing a water-soluble polymer is provided, which comprises polymerizing water-soluble radical-polymerizable monomers comprising a cationic radical-polymerizable monomer as an essential component in a presence of a polysaccharide, an azo polymerization initiator, and a hydrogen-abstracting agent. A polymer flocculant is also provided, which comprises a water-soluble polymer obtained by the production process.

## Description

### TECHNICAL FIELD

The present invention relates to a process for producing a water-soluble polymer, which comprises polymerizing a water-soluble monomer in the presence of a polysaccharide and can be advantageously used in a technical field related to polymerization. The resultant water-soluble polymer can be advantageously used in various technical fields of flocculants, sludge-dewatering agents, retention aids, thickeners, and the like.

### BACKGROUND ART

Water-soluble polymers, particularly those with a high molecular weight, are conventionally used in various technical fields of polymer flocculants, retention aids, thickeners, and the like.

For applications as additives for papermaking such as retention aids, the water-soluble polymer can be a polymer consisting of a starch modified with a water-soluble polymer (hereinafter referred to as a starch-modified polymer) because it has good compatibility with pulps and can provide paper excellent in various performances.

In addition to the applications as additives for papermakingthe Starch-modified polymer is also studied for a flocculant such as a sludge-dewatering agent.

As the starch-modified polymer and a process for producing the same, mention may be made of, for example, a polymer with a particular viscosity, having a specific cation-etherified starch as a backbone polymer to which a side chain having a quaternary ammonium-modified cationic group is grafted (Patent Document 1), a polymer having a polysaccharide as a backbone polymer to which copolymers of (meth)acrylamide and (meth)acrylic acid or its salt are grafted as side chains (Patent Document 2), a production process which involves effecting graft polymerization of water-soluble monomers onto a water-soluble polymer in a solvent of water and adding an aqueous solution of the resultant copolymer in the form of a water-soluble gel to an organic solvent to precipitate in powder form (Patent Document 3), or a production process which involves copolymerizing a polysaccharide and a quaternary salt of dimethylaminoethyl methacrylate using a redox polymerization initiator or a cerium-based polymerization initiator (Non-patent Document 1).
Patent Document 1: Japanese Patent Publication (Kokoku) No. 62-21007 (claims).
Patent Document 2: Japanese Patent Laid-Open (Kokai) No. 6-254306 (claims).
Patent Document 3: Japanese Patent Laid-Open (Kokai) No. 8-41212 (claims).
Non-patent Document 1: Bulletin of the Chemical Society of Japan, 1976, 10: 1625-1630 (claims).

### DISCLOSURE OF INVENTION

### PROBLEMS TO BE SOLVED BY THE INVENTION

However, the above-described production processes are problematic in that a high molecular weight polymer cannot be grafted onto starch, or a large amount of residual monomers remain even if the high molecular weight polymer can be grafted. Also, when the resultant starch-modified polymer is used as a polymeric flocculant such as a sludge-dewatering agent and a retention aid, it is sometimes insufficient in flocculation and dewatering performances.

In addition, the process for producing a starch-modified polymer as described in the Patent Document 3 is disadvantageous in that the process is complicated and costly because it requires, for example, reprecipitation process in a solvent or the like.

Further, the process for producing a starch-modified polymer as described in the Non-patent Document 1 has sometimes caused separation of the resultant polymer into two layers of a grafted polymer layer and an ungrafted polymer layer because of insufficient grafting, in addition to the problem with the large amount of residual monomers.

The present inventors have carried out extensive studies for finding a process for producing a water-soluble polymer, which is easy to produce the polymer, allows a high molecular weight polymer to be grafted onto starch, generates only a small amount of residual monomers, and provides a water-soluble polymer excellent in various flocculation performances when used as a flocculant.

### MEANS FOR SOLVING THE PROBLEMS

As the result of various studies, the present inventors have found that a production process is useful which involves polymerizing a polysaccharide with water-soluble monomers comprising a cationic monomer as an essential component in a presence of a specific polymerization initiator and a hydrogen-abstracting agent. This finding has led to the completion of the invention.

The present invention is described below in detail.

In this specification, acrylate or methacrylate is designated as (meth)acrylate; acrylic acid or methacrylic acid as (meth)acrylic acid; and acrylamide or methacrylamide as (meth)acrylamide.

### 1. The process for producing a water-soluble polymer

The process for producing a water-soluble polymer according to the invention is a process in which a water-soluble radical-polymerizable monomer (hereinafter simply referred to as water-soluble monomer) comprising a cationic radical-polymerizable monomer (hereinafter referred to simply as a cationic monomer) as an essential component is polymerized in the presence of a polysaccharide, an azo polymerization initiator, and a hydrogen-abstracting agent.

The polysaccharide, water-soluble monomer, azo polymerization initiator, and hydrogen-abstracting agent, as well as the production process are described below.

### 1) Polysaccharide

Various polysaccharides may be used in the invention.

By way of example, polysaccharides from natural sources include starches. Specific examples of starches include potato starch, waxy potato starch, sweet potato starch, sugarcorn starch, high-amylose corn starch, wheat starch, rice starch, tapioca starch, sago starch, glumannan, and galactan; and starch raw materials such as wheat flour, corn flour, cut and dried sweet potato, and cut and dried tapioca.

Examples of polysaccharides other than starches include celluloses such as methyl cellulose, ethyl cellulose, hydroxyethyl cellulose, and carboxymethyl cellulose, sodium alginate, gum arabic, dextran, gelatin, casein, collagen, chitin, and chitosan.

Preferred polysaccharides are starches, specifically including the above-described starches such as potato starch, waxy potato starch, sweet potato starch, sugarcorn starch, high-amylose corn starch, wheat starch, rice starch, tapioca starch, sago starch, glumannan, and galactan.

The starch may be a processed starch obtained by chemical or enzymatic modification. Processing methods include, for example, oxidation, esterification, etherification, and acid treatment.

Polysaccharides used in the present invention are preferably the above-described polysaccharides which have been made cationic or amphoteric by an ordinary method because they have high copolymerizability with the later-described water-soluble monomers and provide flocculants excellent in performance.

Polysaccharides may be cationized by an ordinary method.

Cationizing methods include treatment of a starch raw material with a cationizing agent. Specific examples of the cationizing agent include tertiary amines such as diethylaminoethyl chloride and quaternary ammonium salts such as 3-chloro-2-hydroxypropyltrimethylammonium chloride and glycidyltrimethylammonium chloride.

The cationized polysaccharide preferably has a degree of cation substitution of 0.01 to 0.06 weight/weight%, more preferably 0.02 to 0.06 weight/weight% in terms of nitrogen atom.

Polysaccharides may be, for example, those which have been subjected to a known reaction after the cationization. By way of example, they may be amphoteric polysaccharides which have been subjected to an anionization reaction. Specific examples of the anionization reaction include phosphorylation using an inorganic phosphate or the like; urea phosphorylation and oxidation using a hypohalite or the like; carboxymethylation using monochloroacetic acid; and sulfation.

Polysaccharides are preferably employed in a form of a glue solution, and thus are preferably those subjected to cooking treatment. Herein, "cooking" refers to treatment of heating polysaccharides to their gelatinization temperature or higher. Here, the heating temperature may be set as appropriate, depending on the type of the starch to be used, but is preferably 70°C or higher. The cooking of starches may be conducted in a batch or continuous process.

The cooking may be carried out after, or simultaneously with, the above-described cationization.

Preferably, the viscosity of the starch glue solution to be used is 100 to 10,000 mPa·s as determined at 25°C and at a solid content of 10 to 40 weight% using a type B viscometer.

The polysaccharide glue solution used in the invention is preferably diluted with water and made into a 3 to 10 weight% slurry.

When the polysaccharide glue solution has aged or solidified or has become poor in dispersability in water, it is preferably subjected to cooking treatment prior to use. In this case, the cooking method may be the same as that described above.

### 2) Water-soluble monomers

Water-soluble monomers used in the invention comprise a cationic monomer as an essential component.

The cationic monomer may be various compounds in so far as they have radical polymerizability, and specific examples thereof include tertiary salts exemplified by hydrochlorides and sulfates of dialkylaminoalkyl (meth)acrylates such as dimethylaminoethyl (meth)acrylate, diethylaminoethyl (meth)acrylate, dimethylaminoethyl (meth)acrylate, diethylamino-2-hydroxypropyl (meth)acrylate, and dimethylaminopropyl (meth)acrylate; tertiary salts exemplified by hydrochlorides and sulfates of dialkylaminoalkyl (meth)acrylamides such as dimethylaminoethyl (meth)acrylamide; quaternary salts exemplified by alkyl halide adducts such as methyl chloride adducts and aryl halide adducts such as benzyl chloride adducts of dialkylaminoalkyl (meth)acrylates; and quaternary salts exemplified by alkyl halide adducts such as methyl chloride adducts and aryl halide adducts such as benzyl chloride adducts of dialkylaminoalkyl (meth)acrylamides.

Among these compounds, quaternary salts of dialkylaminoalkyl (meth)acrylates are preferable; alkyl halide adducts of dialkylaminoalkyl (meth)acrylates are more preferable.

The water-soluble monomer used in the invention may be optionally combined with an anionic radical-polymerizable monomer (hereinafter referred to as an anionic monomer) and a nonionic radical-polymerizable monomer (hereinafter referred to as a nonionic monomer).

Employed as anionic monomers may be also various compounds in so far as they have radical polymerizability, and specific examples thereof include unsaturated carboxylic acids such as (meth)acrylic acid, crotonic acid, itaconic acid, and maleic acid, and salts thereof. Examples of the salts include ammonium salts and salts of alkali metals such as sodium and potassium.

Among these, (meth)acrylic acid is preferable.

Examples of the nonionic monomer include (meth)acrylamide, dimethyl (meth)acrylamide, diethyl (meth)acrylamide, hydroxylethyl (meth)acrylate, ethylene oxide adduct of methoxy (meth)acrylate, and ethylene oxide adduct of (meth)allyl ether.

Among these, (meth)acrylamide is preferable.

The water-soluble monomer may be optionally combined with other monomers. Other monomers include, for example, methoxyethyl (meth)acrylate, butoxyethyl (meth)acrylate, ethylcarbitol (meth)acrylate, methyl (meth)acrylate, ethyl (meth)acrylate, and vinyl acetate.

In the production process of the invention, proportion of the water-soluble monomer is preferably 50 weight% or more, more preferably 50 to 99 weight%, based on the total amount of the polysaccharide and all the monomers.

When the proportion of the water-soluble monomer is less than 50 weight%, the resultant polymer sometimes becomes insoluble in water, or does not provide a high molecular weight polymer for use as a flocculant.

The water-soluble monomer used in the invention comprises the cationic monomer as an essential component. The proportion thereof is preferably 10 to 99 weight%, more preferably 30 to 90 weight%, based on all the water-soluble monomers.

### 3) Azo polymerization initiator

The invention uses an azo polymerization initiator. The azo polymerization initiator not only functions as a polymerization initiator for the water-soluble monomer, but also has the function of reducing the amount of residual monomers.

Employed as azo polymerization initiators may be various compounds, and specific examples thereof include 4,4'-azobis(4-cyanovaleric acid) (10-hour half life temperature: 69°C; the below-described temperatures inside the parentheses show the same meaning); 2,2'-azobis[N-(2-carboxyethyl)-2-methylpropionamidine] hydrochloride (57°C); dimethyl 2,2'-azobisisobutyrate (66°C); 2,2'-azobisisobutyronitrile (65°C); 2,2'-azobis(2,4-dimethylvaleronitrile) (51°C); 2,2'-azobis(2-methylbutyronitrile) (67°C); 1,1'-azobis(cyclohexane-1-carbonitrile) (88°C); 2,2'-azobis{2-methyl-N-[2-(1-hydroxybutyl)]propionamide} (80°C); 2,2'-azobis[2-methyl-N-(2-hydroxyethyl)propionamide] (86°C); 2,2'-azobis(2-amidinopropane) hydrochloride (56°C); 2,2'-azobis[2-(5-methyl-2-imidazolin-2-yl)propane] hydrochloride (41°C); 2,2'-azobis[2-(2-imidazolin-2-yl)propane] hydrochloride (44°C); 2,2'-azobis[2-(2-imidazolin-2-yl)propane] sulfate (47°C); 2,2'-azobis[2-(3,4,5,6-tetrahydropyrimidin-2-yl)propane] hydrochloride (58°C); 2,2'-azobis{2-[1-(2-hydroxyethyl)-2-imidazolin-2-yl]propane} hydrochloride (60°C); 2,2'-azobis[2-(2-imidazolin-2-yl)propane] (61°C); 2,2'-azobis(2-methylbutaneamidoxime) dihydrochloride (57°C); and 1,1'-azobis(1-acetoxy-1-phenyl)ethane (61°C).

Azo polymerization initiators may be used alone or in a combination of two or more.

Among the above-described azo polymerization initiators, preferable compounds are azo polymerization initiators which have a 10-hour half life temperature of 50°C or more, more preferably 50 to 90°C, even more preferably 50 to 70°C since they have a high solubility in water, generate a water-soluble polymer containing no or little insoluble content, produce a water-soluble polymer with a high molecular weight, and provide a water-soluble polymer containing a reduced amount of unreacted monomer.

Preferred specific examples of the azo polymerization initiator include 4,4'-azobis(4-cyanovaleric acid) (69°C), 2,2'-azobis[N-(2-carboxyethyl)-2-methylpropionamidine] hydrochloride (57°C), 2.2'-azobis{2-methyl-N-[2-(1-hydroxybutyl)]propionamide} (80°C), 2,2'-azobis[2-methyl-N-(2-hydroxyethyl)propionamide] (86°C), 2,2'-azobis(2-amidinopropane) hydrochloride (56°C), 2,2'-azobis[2-(3,4,5,6-tetrahydropyrimidin-2-yl)propane] hydrochloride (58°C), 2,2'-azobis{2-[1-(2-hydroxyethyl)-2-imidazolin-2-yl]propane} hydrochloride (60°C), and 2,2'-azobis(2-methylbutaneamidoxime) dihydrochloride (57°C).

Proportion of the azo polymerization initiator to be used is preferably 50 to 5,000 ppm, more preferably 100 to 3,000 ppm, even more preferably 300 to 1,000 ppm, based on the total amount of the polysaccharide and the water-soluble monomer. An azo polymerization initiator proportion of less than 50 ppm results in incomplete polymerization with an increase in the amount of residual monomers; more than 5,000 ppm provides a water-soluble polymer with lower molecular weight.

### 4) Hydrogen-abstracting agent

In this invention, a hydrogen-abstracting agent is used to favorably graft-copolymerize a water-soluble polymer onto the polysaccharide.

Examples of the hydrogen-abstracting agent include a redox hydrogen-abstracting agent (hereinafter referred to as an RD abstracting agent) and a photopolymerization initiator type hydrogen-abstracting agent (hereinafter referred to as a PT abstracting agent). The RD abstracting agent and PT abstracting agent not only abstract hydrogen from a polysaccharide, but also function as a polymerization initiator for the water-soluble monomer.

The RD abstracting agent is preferably a peroxide. Examples of the peroxide include persulfates such as sodium persulfate, potassium persulfate, and ammonium persulfate, organic peroxides such as benzoyl peroxide, t-butyl hydroperoxide, and succinic acid peroxide, hydrogen peroxide, and sodium bromate. Among these peroxides, persulfates are preferred in that they are excellent in hydrogen-abstracting effect even at low temperature at the beginning of polymerization.

The organic peroxide is preferably used in combination with a reducing agent since the agent facilitates the radical generation of the organic peroxide and can make effective the hydrogen-abstracting effect thereof. The peroxide produces a peroxide radical in the presence of the reducing agent, and the radical causes the abstracting of hydrogen from polysaccharides.

Examples of the reducing agent include sulfites such as sodium sulfite, bisulfites such as sodium bisulfite, ascorbic acid or its salts, rongalite, dithionous acid or its salts, triethanolamine, and cuprous sulfate.

Examples of a preferred combination of the peroxide and the reducing agent include a persulfate and a sulfite, and a persulfate and a bisulfite.

Proportion of the RD abstracting agent is preferably 10 to 1,000 ppm, more preferably 20 to 500 ppm, particularly preferably 20 to 200 ppm, based on the total amount of the polysaccharide and the water-soluble monomer. A proportion of less than 10 ppm results in insufficient hydrogen-abstracting; more than 1,000 ppm may allow the water-soluble polymer to become too low in molecular weight to exhibit sufficient performance.

Proportion of the reducing agent is preferably 10 to 1,000 ppm, more preferably 20 to 500 ppm, based on the total amount of the polysaccharide and the water-soluble monomer.

Preferred PT abstracting agents include ketal type photopolymerization initiators and acetophenone type photopolymerization initiators. In this instance, optical cleavage occurs to generate a benzoyl radical which functions as a hydrogen-abstracting agent.

Examples of the ketal type photopolymerization initiator include 2,2-dimethoxy-1,2-diphenylethan-1-one and benzyldimethylketal.

Examples of the acetophenone type photopolymerization initiator include diethoxyacetophenone, 4-(2-hydroxyethoxy)phenyl-(2-hydroxy-2-propyl)ketone, 1-hydroxycyclohexyl-phenylketone, 2-methyl-2morpholino(4-thiomethylphenyl)propan-1-one, 2-benzyl-2-dimethylamino-1-(4-morpholinophenyl)-butane, 2-hydroxy-2-methyl-1-phenylpropan-1-one, and 2-hydroxy-2methyl-1-[4-(1-methylvinyl)phenyl], and these oligomers.

In addition to the above compounds, the PT abstracting agent may also be a photopolymerization initiator having a polyalkyleneoxide group as described in Japanese Patent Laid-Open (Kokai) No. 2002-097236.

Proportion of the PT abstracting agent is preferably 10 to 1,000 ppm, more preferably 20 to 500 ppm, even more preferably 20 to 200 ppm, based on the total amount of the polysaccharide and the water-soluble monomer. A proportion of less than 10 ppm results in insufficient hydrogen-abstracting or an increase in the amount of residual monomers; more than 1,000 ppm may allow the water-soluble polymer to become too low in molecular weight to exhibit sufficient performance.

### 5) Other polymerization initiators and polymerization promoters

According to the invention, the azo polymerization initiator and the hydrogen-abstracting agent are used as essential components, but can be optionally employed in combination with another polymerization initiator, polymerization promoter or the like.

Examples of another polymerization initiator include photopolymerization initiators other than the ketal type and acetophenone type photopolymerization initiators as described above. Specific examples thereof include benzoin, benzoin methyl ether, benzoin ethyl ether, benzoin isopropyl ether, benzoin isobutyl ether, benzophenone, methyl o-benzoylbenzoate, 4-phenylbenzophenone, 4-benzoyl-4'-methyl-diphenyl sulfide, 3,3',4,4'-tetra(t-butylperoxycarbonyl)benzophenone, 2,4,6-trimethylbenzophenone, 4-benzoyl-N,N-dimethyl-N-[2-(1-oxo-2-propenyloxy)ethyl]benzametanaminium bromide, (4-benzoylbenzyl)trimethylammonium chloride, 2-isopropylthioxantone, 2,4-diethylthioxantone, 2,4-dichlorothioxantone, 1-chloro-4-propoxythioxantone, and 2-(3-dimethylamino-2-hydroxypropoxy)-3,4-dimethyl-9H-thioxanton-9-one mesochloride.

When the photopolymerization initiator is used, a photosensitizer exemplified by an amine-based photosensitizer including triethanolamine and methyldiethanolamine may be also combined.

When the photopolymerization initiator is used, proportion thereof is preferably the same as that of the PT abstracting agent as described above, based on the amount of the water-soluble monomer.

When the RD abstracting agent is used, an inorganic metal-based polymerization promoter such as cupric chloride or ferrous chloride is preferably added as a polymerization promoter. The polymerization promoter is preferably added in an amount of 0.1 to 1.0 ppm based on the total amount of the polysaccharide and the water-soluble monomer.

### 6) Polymerization method

The present invention provides a process for producing a water-soluble polymer which comprises polymerizing water-soluble monomers comprising a cationic monomer as an essential component in a presence of a polysaccharide, an azo polymerization initiator, and a hydrogen-abstracting agent.

According to the invention, the combined use of the azo polymerization initiator and the hydrogen-abstracting agent makes it possible to graft a high molecular weight polymer onto the polysaccharide with a reduced amount of residual monomers, and provide a water-soluble polymer excellent in various flocculation performances when used as a flocculant; the reason is estimated to be as follows.

The hydrogen-abstracting agent can abstract hydrogen from the skeleton of the polysaccharide to make a starting point for graft polymerizing water-soluble monomers onto the polysaccharide and can simultaneously function as a polymerization initiator to promote the growth of the main chain from water-soluble monomers by virtue of generated radicals. In addition, the azo polymerization initiator generates radicals at high temperature, thereby making it possible to convert water-soluble monomers into a high molecular weight. Since the radicals are generated after much heat is generated to reach high temperature, residual unreacted monomers are consumed by the radicals.

Manner of polymerization includes aqueous polymerization, inverse phase suspension polymerization, and inverse phase emulsion polymerization; the aqueous polymerization and inverse phase emulsion polymerization are preferable, and the aqueous polymerization is more preferable in that it is easy to operate.

When the aqueous polymerization is adopted, the polysaccharide and the water-soluble monomer are dissolved or dispersed in an aqueous medium to polymerize at 10 to 100°C in the presence of the polymerization initiator. The polysaccharide and the water-soluble monomer as raw materials are dissolved or dispersed in water, and then added to an aqueous medium when they are used.

When the inverse phase emulsion polymerization is adopted, a method is employed in which an aqueous solution containing the polysaccharide and the monomer is stirred and mixed with an organic dispersion medium containing a hydrophobic surfactant with an HLB of 3 to 6 to perform emulsification, followed by polymerization at 10 to 100°C in the presence of the polymerization initiator to yield a water-in-oil type (inverse phase) polymer emulsion. Examples of the organic dispersion medium include high boiling point hydrocarbon solvents such as mineral spirit.

Proportion of the polysaccharide and the monomer in the aqueous medium or organic dispersion medium may be set as appropriate according to purposes, and is preferably 20 to 70 weight%.

Polymerization method may be photopolymerization, redox polymerization, or the like according to types of the polymerization initiator to be used.

Concrete polymerization methods are as follows. When the RD abstracting agent is used as a hydrogen-abstracting agent, the azo polymerization initiator and the RD abstracting agent may be added to an aqueous solution containing the polysaccharide and the water-soluble monomer. When the PT abstracting agent is used as a hydrogen-abstracting agent, the azo polymerization initiator and the PT abstracting agent may be added to an aqueous solution containing the polysaccharide and the water-soluble monomer before light irradiation.

The polymerization method can also be a combination of the photopolymerization and the redox polymerization.

When molecular weight is controlled, a chain transfer agent may be used. Examples of the chain transfer agent include thiol compounds such as mercaptoethanol and mercaptopropionic acid, and reducing inorganic salts such as sodium sulfite, sodium bisulfite, and sodium hypophosphite.

In the present invention, polymerization is preferably carried out under light irradiation because of short polymerization time and excellent productivity.

When the polymerization under light irradiation is carried out, ultraviolet light and/or visible light can be used as an irradiation light; the ultraviolet light is preferable.

Intensity of light irradiation is determined in consideration of types of the water-soluble monomer, types or concentration of the photopolymerization initiator and/or photosensitizer, the molecular weight of the water-soluble polymer of interest, polymerization time, and the like, and is, in general, preferably 0.5 to 1,000 W/m², more preferably 5 to 400 W/m².

Source of light may be, for example, a fluorescent chemical lamp, a fluorescent blue lamp, a metal halide lamp, or a high pressure mercury lamp.

In polymerization reaction under light irradiation, temperature of an aqueous solution of the water-soluble monomer is not particularly restricted, but typically is preferably 5 to 100°C, more preferably 10 to 95°C in order to allow the photopolymerization reaction to smoothly proceed under mild conditions. The temperature at the beginning of polymerization is preferably 5 to 15°C since water-soluble polymers high in molecular weight is obtained, and heat is easily removed.

The polymerization reaction under light irradiation of an aqueous solution of the water-soluble monomer may be conducted in a batch process or a continuous process.

The water-soluble polymers obtained in the invention comprises, as a major component, a graft copolymer in which a polymer of water-soluble monomers is grafted onto a polysaccharide, but, when used, may contain a water-soluble polymer.

The water-soluble polymer obtained in the invention preferably has a 0.5% salted viscosity (as an index of molecular weight) of 5 to 200 mPa·s, and, when used as a polymeric flocculant described later, more preferably has the viscosity of 10 to 120 mPa·s, more preferably 15 to 90 mPa·s so as to achieve stable dehydration.

In the present invention, "0.5% salted viscosity" refers to a value obtained by determining a sample consisting of 0.5% of a water-soluble polymer dissolved in a 4% sodium chloride aqueous solution, at 25°C using a B type viscometer with a No. 1 or 2 rotor at 60 rpm.

According to the production process of the invention, insoluble content can be reduced. The produced polymer preferably has a 0.1% insoluble content of 5 ml or less after washing.

In the present invention, "0.1% insoluble content" refers to a value determined by dissolving a polymer in purified water to prepare 400 ml of 0.1 weight% (solid content) solution, subjecting a total amount of the solution to filtration using a 83-mesh sieve of 20 cm in diameter, and collecting the insoluble contents left on the sieve and measuring the volume thereof.

Polymers obtained by aqueous polymerization, which typically take the form of a gel, are used after they are chopped by a well-known method, dried at a temperature of about 60 to 150°C using a band type drier, a far-infrared type drier or the like, crushed into powder polymers employing a roll crusher or the like, and size-controlled or supplemented with an additive or the like.

The water-soluble polymer obtained in the invention is preferably used in the form of a powdery product in a variety of applications.

### 2. Applications

The water-soluble polymer obtained in the invention can be applied to various applications, and is particularly useful as a polymer flocculant. As a polymer flocculant, it may be also preferably used as a sludge-dewatering agent and an agent for papermaking in a papermaking process such as a retention aid.

The polymer flocculant according to the invention is particularly useful as a sludge-dewatering agent and a retention aid. The sludge-dewatering agent and the retention aid are described below.

### 1) Sludge-dewatering agent and a method for dewatering sludge

When the sludge-dewatering agent of the present invention (hereinafter, sometimes referred to as a polymer flocculant) is used, it may be mixed with additives well known in the art including sodium bisulfate, sodium sulfate, sulfamic acid and the like as far as dehydration treatment is not adversely affected.

The sludge-dewatering agent of the invention can be applied to various types of sludge such as sludge of organic nature, and mixed sludge including flocculated and sedimented sludge and the like derived from sewage, human waste and general industry waste water such as sludges of food industry, chemical industry, and pulp or papermaking industry.

Particularly, the sludge-dewatering agent of the present invention can be preferably applied to sludge small in fibrous content, namely, sludge high in ratio of excess sludge. Specifically, the sludge dewatering agent of the present invention can be preferably applied to sludge of 10 SS% or more, more preferably 20 to 50 SS% in terms of ratio of excess sludge.

The present dewatering method using the sludge-dewatering agent is concretely a method in which a sludge-dewatering agent is added to sludge so as to form sludge flocs. The floc formation method can follow the methods well-known in the art.

If necessary, inorganic flocculants, organic cationic compounds, cationic polymer flocculants and anionic polymer flocculants can additionally be used.

Examples of the inorganic flocculants include aluminum sulfate, poly aluminum chloride, ferric chloride, ferrous sulfate, poly iron sulfate and the like.

Examples of the organic cationic compounds include polymer polyamine, polyamidine, cationic surfactants and the like.

In the case where inorganic flocculants or organic cationic compounds are added, it is preferable to adjust the pH to be 4 to 8 since sludge can be treated effectively.

As for the pH adjustment method, no particular pH adjustment is needed when an appropriate pH value is obtained after inorganic flocculants or organic cationic compounds are added; however, when the pH range prescribed in the present invention is not satisfied, an acid or an alkali can be added for adjustment.

Examples of the acids include hydrochloric acid, sulfuric acid, acetic acid, sulfamic acid and the like. Additionally, examples of the alkalis include caustic soda, caustic potash, calcium hydroxide, ammonia and the like.

Examples of the cationic polymer flocculants include homopolymers of the above described cationic monomers, copolymers of the above described cationic monomers and nonionic monomers, and the like.

Examples of the anionic polymer flocculants include homopolymers of the above described anionic monomers, copolymers of the above described anionic monomers and nonionic monomers, and the like.

Proportion of polymer flocculant to sludge is preferably 5 to 500 ppm, and the proportion thereof to SS is preferably 0.05 to 1 weight%. When a polymer flocculant and another polymer flocculant are used in combination, it is preferable that the total amount of all the polymer flocculants satisfies the above-described proportion.

Addition amounts of the sludge-dewatering agent and other flocculants, stirring speed, stirring time and the like are recommended to follow the dewatering conditions employed in prior art.

The flocs thus formed are dewatered by procedures well known in the art to form dewatered cakes.

Examples of the dewatering machines include a screw press dewatering machine, a belt press dewatering machine, a filter press dewatering machine, a screw decanter and the like.

Additionally, the sludge dewatering agent of the present invention can be applied to a dewatering method which uses a vessel for granulation and concentration having a filtering part.

Specifically, examples of the dewatering methods include a method in which an inorganic flocculant is added to sludge, then, either after a sludge dewatering agent has been further added or together with the sludge dewatering agent, the sludge is introduced into the vessel for granulation and concentration having the filtering part, the filtrate is taken out of the filtering part while the granulation is made concurrently, and the granulated matter is subjected to dewatering by means of a dewatering machine.

### 2) Retention aids and papermaking methods

In the case where the water soluble polymer of the present invention is used as a retention aid, the polymer is preferably powder. In actual use, the polymer as a raw material is dissolved in water, and used as an aqueous solution of preferably 0.01 to 0.5 weight%, more preferably 0.01 to 0.1 weight%.

The method for using the retention aid can be a conventional method in such a way that, for example, the aid is added when the stuff is diluted to the final concentration for charging into the papermaking machine or added after the dilution.

Stuffs to which the retention aid is applied include those that have been used in the usual papermaking process, and usually contain at least pulp and filler as an additive, and optionally other additives specifically including sizing agents, fixers, paper strength agents, colorants and the like.

Examples of the fillers include clay, kaoline, agalite, talc, calcium carbonate, magnesium carbonate, sulfate of lime, barium sulfate, zinc oxide, titanium oxide and the like. Examples of the sizing agents include acrylic acid-styrene copolymers and the like; examples of the fixers include aluminum sulfate, cationic starch, alkylketene dimer and the like; and examples of the paper strength agents include starch, cationic or amphoteric polyacrylamide and the like.

Proportion of the retention aid to be added is preferably 0.05 to 0.8 weight%, more preferably 0.05 to 0.5 weight% in relation to the dry pulp weight in the stuff.

The pH value of the stuff after adding the retention aid is maintained to be preferably 5 to 10, more preferably 5 to 8. Immediately after the addition of the retention aid, the stuff is charged into the papermaking machine.

### EFFECTS OF INVENTION

According to the present invention, a high molecular weight polymer can be grafted onto a polysaccharide with a reduced amount of residual monomers in a simple manner, and a water-soluble polymer is obtained, which is excellent in various flocculation performances as a flocculant particularly and excellent in characteristics as a polymer flocculant or a retention aid particularly.

### BEST MODE FOR CARRYING OUT THE INVENTION

The present invention relates to a process for producing a water-soluble polymer, which involves polymerizing a water-soluble monomer comprising a cationic monomer as an essential component in the presence of a polysaccharide, an azo polymerization initiator, and a hydrogen-abstracting agent.

The azo polymerization initiator is preferably used in an amount of 50 to 5,000 ppm, based on the total amount of the polysaccharide and the water-soluble monomer.

A peroxide is preferably used as the hydrogen-abstracting agent, and is preferably employed in an amount of 10 to 1,000 ppm, based on the total amount of the polysaccharide and the water-soluble monomer.

The water-soluble monomer is preferably used in an amount of 50 weight% or more, based on the total amount of the polysaccharide and the water-soluble monomer.

The resultant water-soluble polymer preferably has a 0.5% salted viscosity of 5 to 200 mPa·s. In addition, the above-described polymerization is preferably carried out by photopolymerization.

Further, the water-soluble polymer obtained according to the production process of the invention can be preferably used as a polymer flocculant, and can particularly preferably be used as a sludge-dewatering agent or a retention aid.

### EXAMPLES

The present invention is more concretely described below with reference to Examples and Comparative Examples.

In the following description, "%" refers to weight%.

### Example 1

In a stainless-steel Dewar flask were charged an aqueous solution of dimethylaminoethyl acrylate methyl chloride quaternary salt (hereinafter referred to as "DAC") and an aqueous solution of acrylamide (hereinafter referred to as "AM") in a total amount of 760 g so as to provide a DAC/AM weight ratio of 60/40 (molar ratio of 35/65) and a solid content of 56%.

An amphoterized starch slurry (Ace KT-245 from Oji Cornstarch Co., Ltd.; solid content: 22% or less; hereinafter referred to as "KT-245") was diluted to a solid content of 5% with an ion exchanged water and further subjected to heating and cooking at 80°C for 30 minutes to obtain an amphoterized starch slurry having a solid content of 6%. The obtained slurry was charged in an amount of 220 g which corresponds to 3% relative to the total amount of monomers and starch expressed in terms of solid contents thereof. Also, 20 g of ion exchanged water was added to adjust the solid content of all monomers and starch to 43% and the total weight of the same to 1.0 kg, followed by stirring and dispersing.

Subsequently, the solution was adjusted to a temperature of 10°C while blowing nitrogen gas into the solution for 60 minutes. Then, azobisamidinopropane hydrochloride (hereinafter referred to as V-50), ammonium persulfate (hereinafter referred to as APS), sodium bisulfite, and cupric chloride were added at concentrations of 1,000 ppm, 30 ppm, 30 ppm, and 0.3 ppm, respectively based on the solid weight of all monomers and starch to start polymerization. After 60 minutes, a water-soluble polymer in hydrous gel form was obtained.

The obtained polymer was taken out of the bottle and chopped. This was dried at a temperature of 80°C for 5 hours and crushed to obtain a powder polymer. This polymer is referred to as A-1. A-1 was determined for the amount of 0.1% insoluble content (hereinafter simply referred to as insoluble content), 0.5% salted viscosity (hereinafter simply referred to as salted viscosity), and the amount of residual monomer according to the following methods. The results are shown in Table 1.
- Insoluble content
   The polymer is dissolved in purified water to prepare 400 ml of a 0.1% (in terms of solid content) aqueous solution.
   The total amount of this aqueous solution is filtered on a 83-mesh sieve of 20 cm in diameter, followed by collecting the insoluble content left on the sieve to determine the volume thereof.
- Salted viscosity
   The polymer is dissolved in a 4% sodium chloride aqueous solution to prepare a 0.5% polymer aqueous solution. The viscosity of the polymer aqueous solution is determined, using a B type viscometer, 5 minutes after rotation at 60 rpm at 25°C.
- Residual monomer
   To a 30-ml Erlenmeyer flask is added 2.0 g of the polymer, to which 20 ml of a mixture of acetone/water = 8/2 is then added. One hour after the extraction, the amount of unreacted acrylamide is measured by gas chromatography using Model G-3000 from Hitachi Ltd.

### Example 2

Polymerization was performed under the same conditions as in Example 1 using the monomers and polysaccharide shown in Table 1, to obtain a water-soluble polymer in hydrous gel form. In this respect, KT-36 was a cationized starch from Oji Cornstarch Co., Ltd. (trade name: Ace KT-36; solid content: 22%; hereinafter referred to as "KT-36"), and was subjected to cooking under the same conditions as in Example 1.

The resultant polymer was taken out of the bottle and dried and crushed under the same conditions as in Example 1 to obtain a powder polymer.

The obtained polymer was determined for insoluble content, salted viscosity, and the amount of residual monomers according to the same method as in Example 1. The results are shown in Table 1.

### Comparative Examples 1 to 3

Polymerization was performed under the same conditions as in Example 1 using the monomers and polysaccharide shown in Table 1, to obtain water-soluble polymers in hydrous gel form.

The obtained polymers were taken out of the bottles and dried and crushed under the same conditions as in Example 1 to obtain powder polymers.

The obtained polymers were determined for insoluble content, salted viscosity, and the amount of residual monomers according to the same method as in Example 1. The results are shown in Table 1.

**Table 1**

| | | Ex. 1 | Ex. 2 | Com. Ex. 1 | Com. Ex. 2 | Com. Ex. 3 |
|---|---|---|---|---|---|---|
| Polymer No. | | A-1 | A-2 | B-1 | B-2 | B-3 |
| Monomers 1) | DAC | 60 (35) | 60 (35) | 60 (35) | 60 (35) | 60 (35) |
| | AM | 40 (65) | 40 (65) | 40 (65) | 40 (65) | 40 (65) |
| Poly- saccharides²⁾ | KT-36 | 0 | 3 | 0 | 0 | 0 |
| | KT-245 | 3 | 0 | 0 | 3 | 3 |
| Monomers/ (monomers+sacc haride) (%) | | 97 | 97 | 100 | 97 | 97 |
| Poly- merization conditions | Monomer concentration (%) | 43 | 43 | 43 | 43 | 43 |
| | Polymerization initiation temperature (°C) | 10 | 10 | 10 | 10 | 10 |
| | Polymerization method³⁾ | Red | Red | Red | Thermal | Red |
| | V-50 (ppm)⁴⁾ | 1000 | 1000 | 1000 | 1000 | 0 |
| | APS(ppm)⁴⁾ | 30 | 30 | 30 | 0 | 30 |
| | NaHSO₃(ppm)⁴⁾ | 30 | 30 | 30 | 0 | 30 |
| | Cupric chloride (ppm) ⁴⁾ | 0.3 | 0.3 | 0.3 | 0 | 0.3 |
| Polymerization time (minutes) | | 40 | 38 | 38 | 40 | 40 |
| State of gel | | Uniform | Uniform | Uniform | Two-layer separated | Uniform |
| Physical properties | Salted viscosity (mPa·s) | 32 | 37 | 40 | 40 | 10 |
| | Insoluble content (ml) | 0 | 0 | 0 | 0 | 300 |
| | Residual monomer amount (%) | 0.17 | 0.17 | 0.17 | 0.17 | 3.0 |

1) Unit: %, unit in parenthesis: mole%
2) Unit: %, proportion based on solid weight of all monomers and starch
3) Red: redox polymerization, Thermal: thermal polymerization
4) Proportions based on the solid weight of all monomers and starch

In Examples 1 and 2 and Comparative Example 1, the polymerizations proceeded without problems to provide polymers which were high in salted viscosity and low in insoluble content and residual monomers. However, as shown in Comparative Example 8 described later, the polymer obtained in Comparative Example 1 was insufficient in flocculant performance.

On the other hand, in Comparative Example 2 using no hydrogen-abstracting agent, the gel of the resultant polymer was separated into two layers which were thought to be a starch-rich polymer layer and a monomer-rich polymer layer due to insufficient grafting. In addition, in Comparative Example 3 using no azo polymerization initiator, the resultant polymer had a low salted viscosity and an increased amount of residual monomers.

### Example 3

A DAC aqueous solution and an AM aqueous solution in the total amount of 760 g were charged in a stainless-steel reaction bottle at a weight ratio of DAC/AM = 60/40 (molar ratio of 35/65) and a solid content of 56%.

KT-245 was subjected to cooking under the same conditions as in Example 1 and made the solid content thereof to 6%. This polysaccharide was charged in an amount of 220 g which corresponds to 3% relative to the total amount of monomers and starch expressed in terms of solid contents thereof. 20 g of ion exchanged water was then added thereto so as to adjust the solid content of all monomers and starch to 43% and a total weight to 1.0 kg, followed by stirring and dispersing.

Subsequently, the solution was adjusted to a temperature of 10°C while blowing nitrogen gas into the solution for 60 minutes. Then, V-50, cupric chloride, APS, and sodium bisulfite were added at concentrations of 1,000 ppm, 0.3 ppm, 30 ppm, and 30 ppm, respectively, based on the solid weight of all monomers and starch followed by conducting polymerization by irradiation at an irradiation intensity of 6.0 mW/cm² for 60 minutes using a 100-W black light arranged above the reaction bottle to obtain a water-soluble polymer in hydrous gel form.

The obtained polymer was taken out of the bottle and dried and crushed under the same conditions as in Example 1 to obtain a powder polymer. This polymer is referred to as A-3.

The obtained polymer was determined for insoluble content, salted viscosity, and the amount of residual monomers according to the same method as in Example 1. The results are shown in Table 2.

### Examples 4 to 6

Polymerization was performed under the same conditions as in Example 3 using the monomers and polysaccharide shown in Table 2 to obtain water-soluble polymers in hydrous gel form.

In Table 2, AA means acrylic acid.

The obtained polymers were taken out of the bottles and dried and crushed under the same conditions as in Example 1 to obtain powder polymers.

The obtained polymers were determined for insoluble content, salted viscosity, and the amount of residual monomers according to the same method as in Example 1. The results are shown in Table 2.

In Examples 4 to 6, the polymerizations proceeded without problems to provide polymers which were high in salted viscosity and low in insoluble content and residual monomers.

**Table 2**

| | | Ex. 3 | Ex. 4 | Ex. 5 | Ex. 6 |
|---|---|---|---|---|---|
| Polymer No. | | A-3 | A-4 | A-5 | A-6 |
| Monomers ¹⁾ | DAC | 60 (35) | 60 (35) | 67.3 (43) | 67.3 (43) |
| | AM | 40 (65) | 40 (65) | 29.8 (52) | 29.8 (52) |
| | AA | 0 | 0 | 2.9 (5) | 2.9 (5) |
| Polysaccharides 2) | KT-36 | 0 | 3 | 0 | 3 |
| | KT-245 | 3 | 0 | 3 | 0 |
| Monomers/(monomers+saccharide) (%) | | 97 | 97 | 97 | 97 |
| Polymerization conditions | Monomer concentration (%) | 43 | 43 | 42 | 42 |
| | Polymerization initiation temperature (°C) | 10 | 10 | 10 | 10 |
| | polymerization method ³⁾ | UV+Red | UV+Red | UV+Red | UV+Red |
| | V-50(ppm)⁴⁾ | 1000 | 1000 | 1000 | 1000 |
| | APS(ppm)⁴⁾ | 30 | 30 | 30 | 30 |
| | NaHSO₃(ppm) ⁴⁾ | 30 | 30 | 30 | 30 |
| | Cupric chloride (ppm)⁴⁾ | 0.3 | 0.3 | 0.3 | 0.3 |
| Polymerization time (minutes) | | 15 | 15 | 20 | 20 |
| State of gel | | Uniform | Uniform | Uniform | Uniform |
| Physical properties | Salted viscosity (mPa·s) | 37 | 32 | 32 | 37 |
| | Insoluble content (ml) | 0 | 0 | 0 | 0 |
| | Residual monomer amount (%) | 0.17 | 0.16 | 0.17 | 0.18 |

1) Unit: %, unit in parenthesis: mole%
2) Unit: %, proportion based on solid weight of all monomers and starch
3) Red: redox polymerization, Thermal: thermal polymerization
4) Proportions based on the solid weight of all monomers and starch

### Comparative Examples 4 to 7

Polymerization was performed under the same conditions as in Example 3 using the monomers and polysaccharide shown in Table 3 to obtain water-soluble polymers in hydrous gel form.

The obtained polymers were taken out of the bottles and dried and crushed under the same conditions as in Example 1 to obtain powder polymers.

The obtained polymers were determined for insoluble content, salted viscosity, and the amount of residual monomers according to the same method as in Example 1. The results are shown in Table 3.

In Comparative Examples 4 and 5 using no starch, the polymerizations proceeded without problems to provide polymers which were high in salted viscosity and low in insoluble content and residual monomers. However, as shown in Comparative Examples 9 and 10 described later, the polymers obtained in Comparative Examples 4 and 5 were insufficient in flocculant performance.

On the other hand, in Comparative Example 6 using no hydrogen-abstracting agent, the gel of the resultant polymer was separated into two layers due to insufficient grafting. In addition, in Comparative Example 7 using no azo polymerization initiator, the resultant polymer was low in salted viscosity and large in the amount of residual monomers.

**Table 3**

| | | Com. Ex. 4 | Com. Ex. 5 | Com. Ex. 6 | Com. Ex. 7 |
|---|---|---|---|---|---|
| Polymer No. | | B-4 | B-5 | B-6 | B-7 |
| Monomers ¹⁾ | DAC | 60 (35) | 67.3 (43) | 60 (35) | 67.3 (43) |
| | AM | 40 (65) | 29.8 (52) | 40 (65) | 29.8 (52) |
| | AA | 0 | 2.9 (5) | 0 | 2.9 (5) |
| Saccharides ²⁾ | KT-36 | 0 | 0 | 0 | 0 |
| | KT-245 | 0 | 0 | 3 | 3 |
| Monomers/(monomers+saccharide) (%) | | - | - | 97 | 97 |
| Polymerization conditions | Monomer concentration (%) | 43 | 42 | 43 | 42 |
| | Polymerization initiation temperature (°C) | 10 | 10 | 10 | 10 |
| | Polymerization method | UV | UV | UV | Red |
| | V-50 (ppm)⁴⁾ | 1000 | 1000 | 1000 | 0 |
| | APS (ppm)⁴⁾ | 0 | 0 | 0 | 30 |
| | NaHSO₃ (ppm)⁴⁾ | 0 | 0 | 0 | 30 |
| | Cupric chloride (ppm)⁴⁾ | 0 | 0 | 0 | 0.3 |
| Polymerization time (minutes) | | 15 | 15 | 20 | 35 |
| State of gel | | Uniform | Uniform | Two-layer separated | Uniform |
| Physical properties | Salted viscosity (mPa·s) | 40 | 40 | 40 | 10 |
| | Insoluble content (ml) | 0 | 0 | 0 | 300 |
| | Residual monomer amount (%) | 0.16 | 0.15 | 0.16 | 5.0 |

1) Unit: %, unit in parenthesis: mole%
2) Unit: %, proportion based on solid weight of all monomers and starch
3) Red: redox polymerization, Thermal: thermal polymerization
4) Proportions based on solid weight of all monomers and starch

### Examples 7 and 8 (Application as sludge-dewatering agents)

Papermaking wastewater (pH = 6.5, SS = 40,000 mg/l) was used as a sludge to be treated to evaluate sludge-dewatering performance. As flocculants were used the 0.1% aqueous solutions of polymers A-1 and A-2 obtained in the Examples above.

In a 500-ml beaker was placed 200 ml of the sludge, to which the flocculant was then added, followed by stirring for 90 seconds using a stirrer to produce sludge flocs, whose particle size was then determined.

Then, a 80-mesh net was used as a filter to subject the above-described sludge floc dispersion to gravity filtration. After 10 seconds, the filtrate volume was measured, and presented as a filtration rate. These evaluation results are shown in Table 4.

### Comparative Example 8 (Application as a sludge-dewatering agent)

Sludge flocs were produced in the same manner as in Example 7 except that a 0.2% aqueous solution of polymer B-1 was used as a flocculant, and the particle size of the flocs was determined.

Then, the filtration rate and the water content were determined as described in Example 7. The evaluation results are shown in Table 4.

**Table 4**

| | Ex. 7 | | Ex. 8 | | Com. Ex. 8 | |
|---|---|---|---|---|---|---|
| Polymer No. | A-1 | | A-2 | | B-1 | |
| Addition amount (ppm) | 50 | 60 | 50 | 60 | 50 | 60 |
| Floc size (mm) | 4 | 8 | 4 | 7 | 2 | 5 |
| Filtration rate (ml/10 sec) | 77 | 84 | 80 | 86 | 73 | 82 |

The results in Table 4 show that the polymer flocculants according to the invention had large floc sizes, high initial freeness, and good draining properties, and provided flocs extremely favorable in performance.

On the other hand, the water-soluble polymer in which starch was not modified (Comparative Example 8) was insufficient in sludge-dewatering performance.

### Examples 9 to 12 (Applications as sludge-dewatering agents)

Papermaking wastewater (pH = 7.0, SS = 30,700 mg/l) was used as a sludge to be treated to evaluate sludge-dewatering performance. As flocculants were used 0.1% aqueous solutions of polymers A-3 to A-6 obtained in the Examples above.

Sludge flocs were produced in the same manner as in Example 7, and the particle size of the flocs was determined.

Then, the filtration rate and the water content were determined in the same manner as in Example 7. The evaluation results are shown in Table 5.

**Table 5**

| | Ex. 9 | | Ex. 10 | | Ex. 11 | | Ex. 12 | |
|---|---|---|---|---|---|---|---|---|
| Polymer No. | A-3 | | A-4 | | A-5 | | A-6 | |
| Addition amount (ppm) | 80 | 90 | 80 | 90 | 80 | 90 | 80 | 90 |
| Floc size (mm) | 3 | 7 | 3 | 7 | 4 | 8 | 4 | 7 |
| Filtration rate (ml/10 sec) | 87 | 112 | 85 | 113 | 90 | 114 | 90 | 115 |

### Comparative Examples 9 to 11 (Application as sludge-dewatering agents)

Sludge flocs were produced in the same manner as in Example 9 except that 0.2% aqueous solutions of polymers B-4 to B-6 obtained in the above Comparative Examples were used as flocculants, and the particle size of the flocs was determined.

Then, the filtration rate and the water content were determined in the same manner as in Example 7. The evaluation results are shown in Table 6.

**Table 6**

| | Com. Ex. 9 | | Com. Ex. 10 | | Com. Ex. 11 | |
|---|---|---|---|---|---|---|
| Polymer No. | B-4 | | B-5 | | B-6 | |
| Addition amount (ppm) | 80 | 90 | 80 | 90 | 80 | 90 |
| Floc size (mm) | 2 | 4 | 2 | 5 | 2 | 4 |
| Filtration rate (ml/10 sec) | 75 | 107 | 78 | 108 | 74 | 105 |

The results in Tables 5 and 6 show that the polymer flocculants according to the invention had large floc sizes, high initial freeness, and good draining properties, and provided flocs extremely favorable in performance.

On the other hand, the water-soluble polymers in which starch was not modified (Comparative Examples 9 and 10) and the water-soluble polymer which had starch modified but was produced using an azo polymerization initiator alone without any hydrogen-abstracting agent (Comparative Example 11) were insufficient in sludge-dewatering performance.

### Examples 13 and 14 and Comparative Example 12 (Application as retention aids)

A 1% pulp slurry consisting of deinked waste paper (hereinafter referred to as DIP) disintegrated and beated (hereinafter referred to as a raw pulp slurry) was used. In this respect, DIP was disintegrated to a Canadian standard freeness (herein after referred to as CSF) of 280 ml according to JIS P 8121 except that the 1% sample was used.

To the raw pulp slurry, aluminum sulfate was added in an amount of 0.5 weight% based on the solid content of the pulp with stirring at 1,000 rpm. Then, a 0.05% aqueous solution of the obtained water-soluble polymer was added thereto as a retention aid in an amount of 200 ppm based on the pulp solid content.

The prepared slurry was sampled in an amount of 300 ml, measured up into 1,000 ml, transferred to a CSF head box, and drained to measure the amount of filtered water. The final pH was 7.0.
- Retention
   Aluminum sulfate and the retention aid were added in the same proportion as described above to the raw pulp slurry with stirring at 1,000 rpm, followed by determining the total retention by a dynamic drainage method.
- Formation after papermaking

A pulp slurry to which the retention aid was added was used to carry out papermaking employing a square type bronze screen from Kumagai Riki Kogyo Co., Ltd. before pressing using a square type sheet machine press, followed by drying at 100°C in an autodrier before visually observing the formation of the resultant paper. In Table 7, the meanings of ○ and Δ are as follows.

○ means that the paper is uniform, and Δ means that there is a portion where fibers are slightly aggregated.

**Table 7**

| | Polymer No. | CSF amount (ml) | Total retention (%) | Formation |
|---|---|---|---|---|
| Ex. 13 | A-3 | 470 | 86.5 | ○ |
| Ex. 14 | A-4 | 470 | 86.5 | ○ |
| Com. Ex. 12 | B-4 | 465 | 85.0 | Δ |

The retention aid according to the invention showed an increased amount of filtered water and an enhanced retention compared to the retention aid of Comparative Example 12 in which starch was not modified, and provided paper highly excellent in formation when it was used for papermaking.

### INDUSTRIAL APPLICABILITY

The production process of the invention can he utilized for producing a water-soluble polymer, and the resultant water-soluble polymer can be preferably used as a polymer flocculant, and particularly preferably as a sludge-dewatering agent or a retention aid.

## Claims

1. A process for producing a water-soluble polymer, which comprises polymerizing a water-soluble radical-polymerizable monomers comprising a cationic radical-polymerizable monomer as an essential component in a presence of a polysaccharide, an azo polymerization initiator, and a hydrogen-abstracting agent.

2. The process for producing a water-soluble polymer according to claim 1, wherein the azo polymerization initiator is used in an amount of 50 to 5,000 ppm, based on the total amount of the polysaccharide and the water-soluble radical-polymerizable monomer.

3. The process for producing a water-soluble polymer according to claim 1 or 2, wherein the hydrogen-abstracting agent is a peroxide.

4. The process for producing a water-soluble polymer according to claim 3, wherein an amount of the peroxide to be used is 10 to 1,000 ppm, based on the total amount of the polysaccharide and the water-soluble radical-polymerizable monomer.

5. The process for producing a water-soluble polymer according to any one of claims 1 through 4, wherein an amount of the water-soluble radical-polymerizable monomer to be used is 50 weight% or more, based on the total amount of the polysaccharide and the water-soluble radical-polymerizable monomer.

6. The process for producing a water-soluble polymer according to any one of claims 1 through 5, wherein the resultant water-soluble polymer has a 0.5% salted viscosity of 5 to 200 mPa·s.

7. The process for producing a water-soluble polymer according to any one of claims 1 through 6, wherein the polymerization is carried out under light irradiation.

8. A polymer flocculant comprising a water-soluble polymer obtained by polymerizing a water-soluble radical-polymerizable monomer comprising a cationic radical-polymerizable monomer as an essential component in a presence of a polysaccharide, an azo polymerization initiator, and a hydrogen-abstracting agent.

9. A sludge-dewatering agent comprising the polymer flocculant according to claim 8.

10. A retention aid comprising the polymer flocculant according to claim 8.
